# DEMANDE DE BREVET EUROPEEN

(11) **EP 0 684 114 A1**
(43) Date de publication de la demande: **29.11.1995**
(21) Numéro de dépôt: 95107827.8
(22) Date de dépôt: 23.05.1995
(51) Int. Cl.: B26D 7/00, B66C 1/30

(54) **Dispositif pour manipuler les outils d'une presse de découpage d'une matière en feuille**

(30) Priorité: 24.05.1994 CH 1594/94
(71) Demandeur: BOBST S.A., CH-1001 Lausanne (CH)
(72) Inventeur: Steiner, Jean-Pierre, CH-1023 Crissier (CH)
(74) Mandataire: Colomb, Claude

(57) **Abrégé**

5Le dispositif pour manipuler les outils d'une presse de découpage d'une matière en feuille, notamment pour manipuler les outils de découpage et d'éjection d'une telle presse, comprend un portique (1) comportant une traverse (2) équipée, à l'extrémité de ses bras (3, 4) d'organes de maintien (6, 7) pour des outils de découpage, d'éjection et de séparation des poses, le portique (1) étant pourvu d'un guidon autorisant sa manoeuvre, à l'aide des deux mains d'un seul opérateur. Le portique (1) est suspendu à un palan. Le dispositif trouve son emploi dans la manipulation des divers outils d'une presse de découpage du papier et du carton.

## Description

La présente invention a pour objet un dispositif pour manipuler les outils d'une presse de découpage d'une matière en feuille, notamment pour manipuler les outils de découpage et d'éjection d'une telle presse.

Les presses de découpage du type auquel s'applique l'objet de l'invention sont utilisées dans le domaine de la fabrication des boites pliantes. En général, elles effectuent le découpage d'un certain nombre de poses ou découpes de boites dans une feuille ayant une surface importante pouvant attein- dre jusqu'à deux mètres carrés. Les parties de la feuille ne constituant pas les poses ou découpes de boites sont des déchets qui sont éliminés dans une station d'éjection des déchets placée à la suite de la station de découpage de la presse. La feuille se présente alors sous la forme d'un pluralité de poses ou découpes de boites reliées entre elles par de petits points d'attache de façon à ce que cette feuille découpée libre de tous déchets, à l'exception du déchet frontal, puisse encore être transportée en direction d'une station de réception de la presse de découpage. Le transport successif entre les différentes stations de la presse s'effectue en principe au moyen de barres de pinces montées entre deux trains de chaînes placés dans les bâtis latéraux de la presse. On connaît une version de presse de découpage qui comporte, entre la station d'éjection et la station de réception, une station de séparation de poses qui permet de séparer l'une de l'autre chacune des poses ou découpes de boites de la feuille de façon à ce que l'on obtienne, dans cette station, des piles de poses ou découpes prêtes à être travaillées par une machine plieuse-colleuse qui en traitant ces poses ou découpes de boites produira des boites pliées et collées utilisables pour recevoir un produit devant être conditionné sous cette forme.

Pour réaliser toutes les opérations dont nous venons de parler, les stations de découpage, d'éjection des déchets et de séparation des poses sont équipées d'outils adéquats qui, de par la fonction qu'ils doivent accomplir, présentent une surface pratiquement identique à celle des feuilles à découper, sont souvent d'un poids important et presque toujours encombrants à manipuler. Les presses de découpage définies ci-dessus sont destinées à réaliser une multitude de travaux différents, c'est-à-dire que de nombreux types de poses ou découpes de boites ayant des formes et des dispositions différentes sur la surface de la feuille seront traitées par la même presse à découper. Il sera donc obligatoire de changer tous les outils des diverses stations de la presse pour passer d'un travail à un autre. Jusqu'à ce jour, on s'est efforcé d'assister les opérateurs de ces presses pour leur faciliter l'échange des outils. On leur a procuré des dispositifs auxiliaires tels que des chariots de manutention se déplaçant devant la presse pour procéder au chargement et au déchargement des outils dans leurs stations respectives. Dans les dispositifs auxiliaires connus à ce jour, le remplacement ou le changement des outils de découpage s'effectue à l'aide d'un chariot auxiliaire comprenant deux longerons montés en opposition entre deux bâtis latéraux. Ces longerons comportent, sur leur face intérieure, deux coulisses dont une paire est destinée à recevoir un nouvel outil. Au moment du changement de travail, on amène le chariot en face de l'ouverture des bras de la station de découpage, après avoir retiré sur ceux-ci l'un des outils préalablement utilisé dans la presse à platines. Ensuite, on introduit cet outil dans la paire de coulisses laissée libre du chariot, on verrouille cet outil en position horizontale dans ces coulisses et l'on fait pivoter de 180 degrés, dans un plan vertical, l'ensemble constitué par le nouvel outil, l'outil utilisé et les longerons de façon à ce que le nouvel outil viennent se positionner exactement en face des glissières des bras, on libère le nouvel outil de ses verrouillages et on peut alors l'insérer dans la station de découpage où il sera à nouveau verrouillé. Il faudra ensuite retirer le chariot de devant la machine puis le décharger de l'ancien outil de manière à pouvoir le charger avec le deuxième nouvel outil de découpage et recommencer l'opération. Dans ce genre de dispositifs, le chariot est presque toujours déplacé perpendiculairement par rapport à la station de découpage.

La station d'éjection de la presse à découper comprend elle-aussi des outils d'éjection qui devront obligatoirement être échangés lors du passage à un autre travail. Jusqu'à présent, on procédait manuellement à cet échange. Cependant, vu la dimension et le poids relativement important de ces outils, cette opération nécessitait deux personnes.

Cette façon de faire présente, entre autres, l'inconvénient de devoir effectuer des chargements et des déchargements d'outils sur un chariot pour les outils de découpage et des chargements et des manutentions effectués par deux personnes, ce qui prend un temps relativement long ayant une influence défavorable sur le rendement de production de la presse à découper qui doit être à l'arrêt pendant toute l'opération. On peut encore relever le fait que les outils d'éjection sont stockés dans des magasins disposés dans la surface de travail située devant la presse, ce qui est néfaste pour l'utilisation de celle-ci de par la réduction de la mobilité de ses utilisateurs.

Il convient donc, pour augmenter la production globale d'une presse de découpage, tout en améliorant les coûts entraînés par l'utilisation d'une installation de manipulation, de réduire au maximum les temps d'arrêt dûs aux réglages et aux changements de travaux et de libérer l'espace libre devant la presse après l'échange des différents outils de découpage et d'éjection de la presse de découpage.

Le but de la présente invention consiste à supprimer les inconvénients précités. A cet effet, l'invention a pour objet un dispositif conforme à ce qu'énonce la revendication 1.

L'invention sera mieux comprise à l'étude de l'une de ses formes d'exécution illustrée à l'aide des dessins annexés dans lesquels :
- la figure 1 est une vue générale en perspective d'un dispositif de manipulation des outils d'une presse de découpage,
- la figure 2 est une vue selon A de la figure 1,
- la figure 3 est une vue en plan du dispositif de manipulation,
- la figure 4 est une vue de détail de l'extrémité de l'organe de verrouillage de l'un des bras du portique du dispositif de manipulation,
- la figure 5 est une vue en coupe selon V-V de la figure 4, et
- la figure 6 est une vue en coupe selon VI-VI de la figure 2.

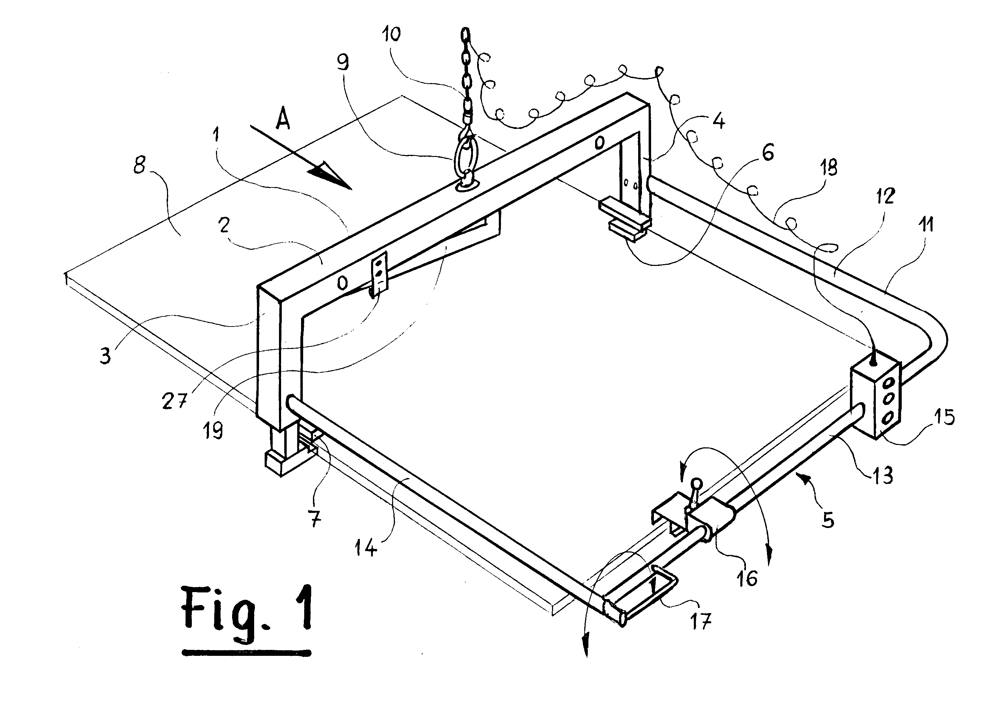

La figure 1 est une vue générale en perspective d'un dispositif de manipulation des outils d'une presse de découpage. Ce dispositif est composé d'un portique 1 comprenant une traverse 2 dont chaque extrémité est équipée d'un bras 3, respectivement 4. L'extrémité inférieure du bras 4 est pourvue d'un organe de maintien 6 pouvant soutenir divers outils différents, tels que des outils de découpage, d'éjection ou de séparation de poses. L'extrémité inférieure du bras 3 est pourvue d'un organe de maintien 7 pouvant lui aussi soutenir divers outils différents. L'organe de maintien 7 du bras 3 est agencé de manière à ce qu'il puisse assurer la position des outils supportés par les organes de maintien 6 et 7 lors de leur manipulation. Le portique 1 est muni d'un guidon 5 comprenant un bras coudé 11 formé d'un bras longitudinal 12 et d'un bras transversal 13 servant en fait de poignée de commande pour le dispositif de manipulation. Un autre bras longitudinal 14 est attaché à l'extrémité du bras transversal 13. Le bras transversal supporte, sur sa droite, un boîtier de commande pour un palan (non représenté) alors que sur sa gauche, il est équipé d'un organe de bloquage déplaçable 16 et d'un organe de verrouillage 17. Le boîtier de commande 15 est relié au palan (non représenté) par un câble électrique 18 enroulé en spirale. La traverse 2 d'une section en forme de U contient un dispositif auxiliaire de maintien 19 qui sera décrit en détail plus avant dans la présente description. La traverse 2 comporte également un anneau de levage 9, fixé au milieu de sa longueur, et dans lequel s'engage le crochet de sécurité de la chaîne 10 du palan (non représenté).

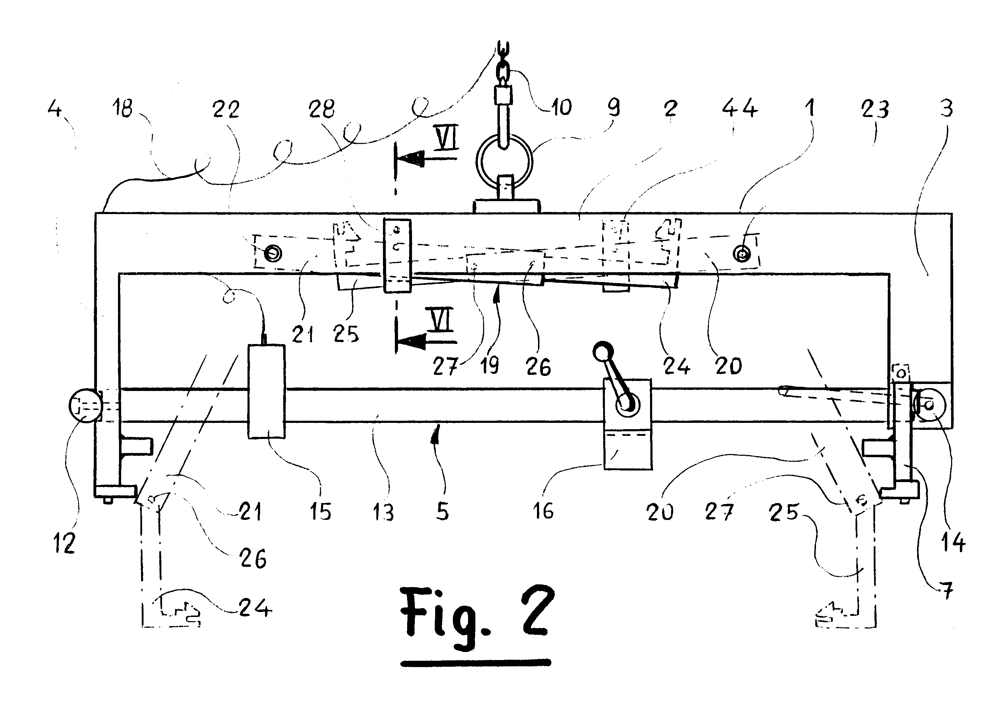

La figure 2 est une vue selon A de la figure 1 montrant la manière dont le dispositif auxiliaire de maintien 19 est monté dans la traverse 2 du portique 1. Le dispositif auxiliaire de maintien 19 comporte deux bras 20 et 21 agencés de façon à pouvoir pivoter autour des axes 22 et 23 fixés dans la traverse 2. Chacun de ces deux bras 20 et 21 est équipé, à l'une de ses extrémités d'un organe de préhension 24, respectivement 25, destiné à saisir des outils ayant une épaisseur différente de celle des outils pouvant être manipulés par les organes de maintien 6 et 7. Les organes de préhension 24 et 25 sont montés de manière à pouvoir pivoter autour d'un axe 26, respectivement 27, placé aux extrémités des bras 20 et 21. La position en service du dispositif de maintien 19 est représentée en traits mixtes sur cette figure. Lorsque l'utilisation du dispositif de maintien 19 n'est pas nécessaire, les bras 20 et 21 sont escamotés à l'intérieur de la traverse 2 et retenus dans cette position au moyen de deux arrêts 28 et 44 disposés de chaque côté de la traverse 2.

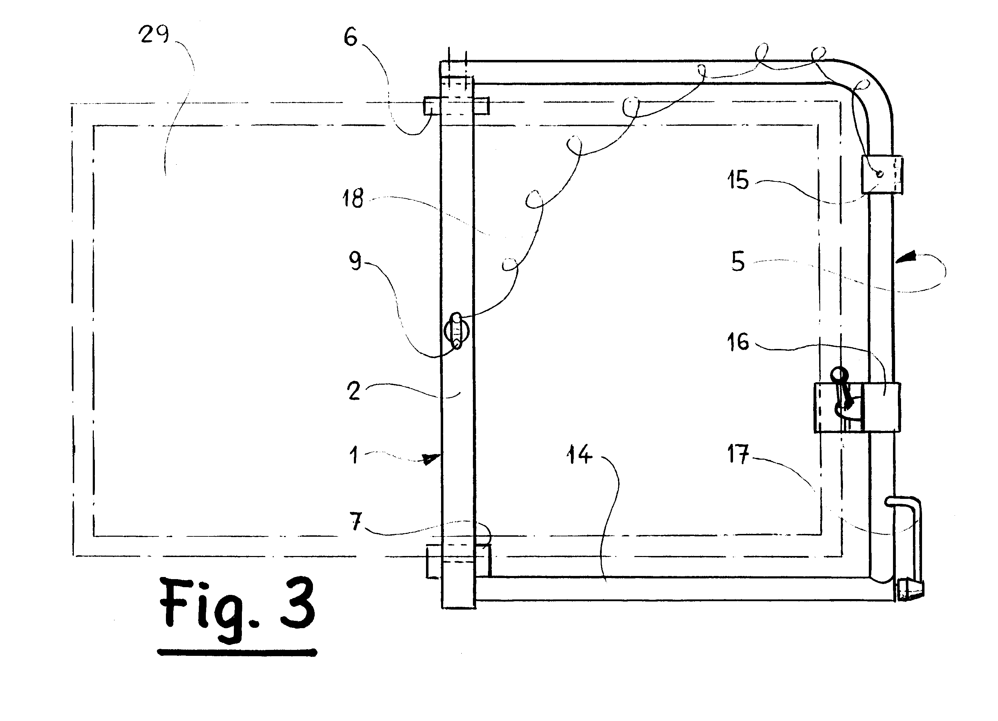

La figure 3 est une vue en plan du dispositif de manipulation dans laquelle, on a représenté la disposition de ses divers éléments lorsque l'on travaille avec un outil d'éjection ou de séparation des poses 29 ayant une configuration différente de l'outil de découpage 8 représenté à la figure 1. Les outils d'éjection ou de séparation des poses se présentent sous la forme de cadres formés de plusieurs barres entrecroisées alors que les outils de découpage se présentent sous la forme d'un châssis métallique supportant la forme à découper. De plus, les outils de découpage possèdent, au niveau des organes de maintien 6 et 7, un dispositif de verrouillage (non représenté) qui empêche leur rotation par rapport aux organes de maintien 6 et 7 alors que cela n'est pas le cas pour les outils d'éjection ou de séparation des poses. Ainsi, lorsque l'on manipule ce genre d'outils, on utilise l'organe de bloquage 16 comme cela est représenté sur cette figure.

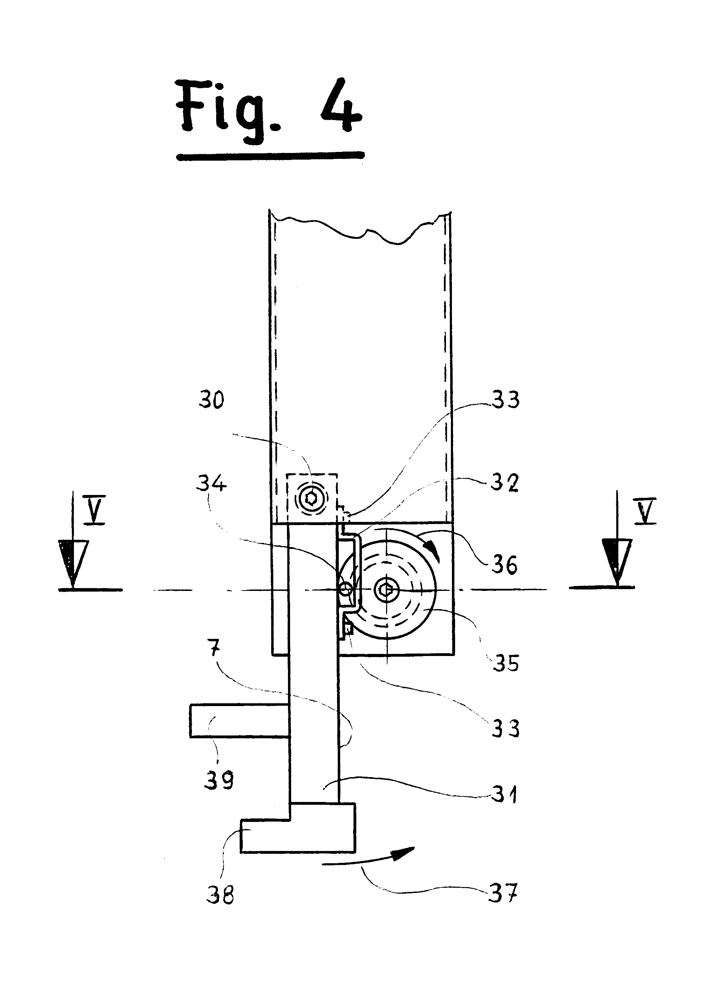

La figure 4 est une vue de détail, selon A, de l'extrémité de l'organe de maintien 7 de l'un des bras 3 du portique 1 du dispositif de manipulation. L'organe de maintien 7 est monté sur un pivot 30 agencé à la partie inférieure du bras 3. La barrette verticale 31 de l'organe de maintien 7 est équipée d'un étrier 32 fixé contre sa face arrière au moyen des vis 33. Une goupille cylindrique 34 fixée sur un disque 35 s'engage dans l'étrier 32 de façon à ce que lors de la rotation du disque 35, dans le sens de la flèche 36, l'organe de maintien 7 soit pivoté dans le sens indiqué par la flèche 37 pour libérer l'outil tenu par les organes de maintien 6 et 7. La main de l'organe de maintien 7, similaire à celle de l'organe de maintien 6, comporte un talon 38 et une semelle 39 qui peuvent être rapportés par soudure sur la barrette verticale 31.

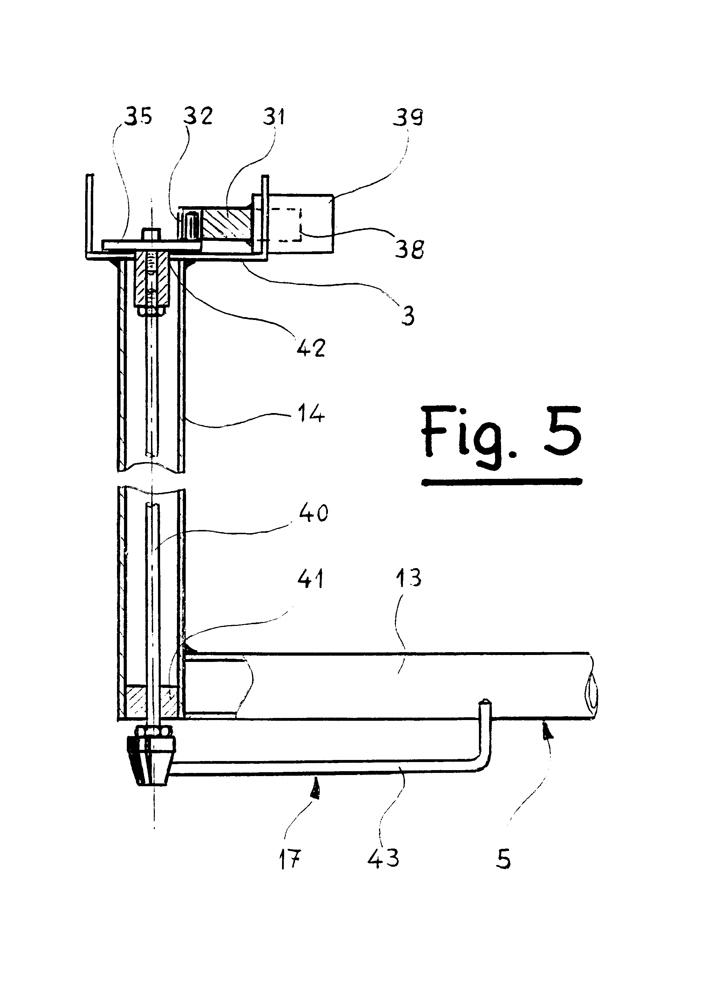

La figure 5 est une vue en coupe selon V-V de la figure 4 montrant en détail la construction de l'organe de verrouillage 17. Celui-ci comprend une tige 40 située dans l'intérieur du bras longitudinal 14 constitué par un tube. Cette tige 40 est maintenue, à l'une de ses extrémités dans un palier 41 fermant le tube du bras longitudinal 14. Son autre extrémité, équipée du disque 35 tourne dans un alésage 42 usiné dans la paroi du bras 3. L'extrémité de la tige 40 traversant le palier 41 est munie d'une poignée 43.

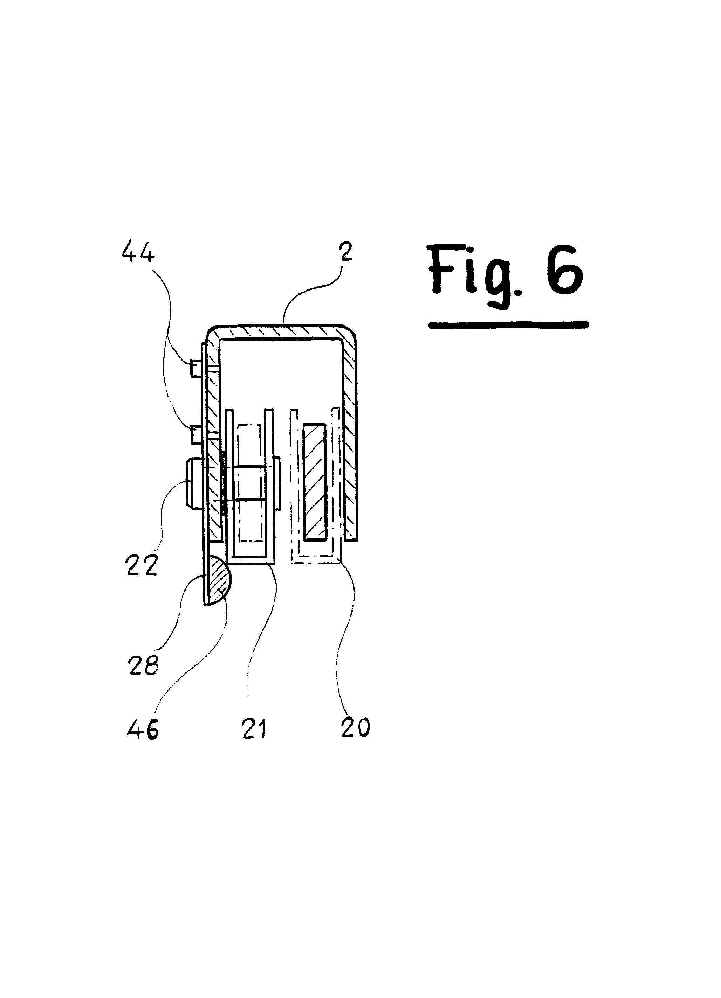

La figure 6 est une vue en coupe selon VI-VI de la figure 2 représentant la manière dont les bras 20 et 21 sont maintenus à l'intérieur de la traverse 2 par les arrêts 28, respectivement 44. Sur cette figure, seul l'arrêt 28 est représenté. Cet arrêt 28 est identique à l'arrêt 44 et il est fixé contre la face de la traverse 2 par des vis 45. Cet arrêt 28 est constitué par une lame ressort à l'extrémité de laquelle est brasé un nez de retenue 46.

Nous allons maintenant décrire l'utilisation du dispositif de manipulation. Ainsi que nous l'avons déjà expliqué, un changement de travail sur la presse de découpage nécessite le changement des différents outils de découpage, d'éjection et de séparation des posez. Pour changer l'outil de découpage, l'opérateur le déverrouille de la station de découpage, puis il le retire quelque peu de cette station sur des bras appartenant à la presse. Il saisit ensuite le dispositif de manipulation par sa barre transversale 13, sa main droite le pilotant à l'aide du boîtier de commande 15, puis l'amène en position sur les côtés de l'outil de découpage de façon à ce que les organes de maintien 6 et 7 vienne saisir l'outil sur ses bords, sensiblement dans un axe passant par son centre de gravité. A cet instant, l'organe de maintien 7 est en position ouverte, c'est-à-dire que la poignée 43 du dispositif de verrouillage 17 aura été tournée vers la gauche par la main gauche de l'opérateur. Le dispositif de manipulation étant en place par rapport à l'outil de découpage, l'opérateur tournera, avec sa main gauche, la poignée 43 vers la droite, ce qui aura pour effet de verrouiller l'outil de découpage entre les deux organes de maintien 6 et 7. L'outil de découpage étant alors supporté par le dispositif de manipulation, l'opérateur pourra facilement le déplacer puis l'amener devant un magasin ou il introduira l'outil utilisé et le libérera du dispositif de manipulation en effectuant les opérations inverses à celles qu'il a effectuées devant la station de découpage. Il prendra alors de ce même magasin un nouvel outil de découpage qu'il amènera en face de la station de découpage de la presse et qu'il y introduira. On peut voir, à la suite de cette explication, que toute l'opération d'échange de l'outil de découpage a été réalisée par un seul opérateur qui, en raison de la conception du dispositif de manipulation, aura toujours pu se servir de ses deux mains pour à la fois déplacer et verrouiller l'outil de découpage dans les positions respectives qu'il devait occuper soit dans la presse, soit dans son magasin.

Pour manipuler un outil d'éjection ou de séparation des posez (voir figure 3), les opérations seront identiques à celles que nous venons de décrire. Seule une opération supplémentaire sera nécessaire. Cette opération consistera à faire pivoter le dispositif de bloquage 16 de façon à ce qu'il vienne s'engager sur l'une des barres transversales du cadre des outils pour empêcher leur basculement lors des manipulations.

Pour manipuler des éléments d'outils, tels que par exemple des plaques à découper présentant une épaisseur relativement faible, on utilisera le dispositif auxiliaire 19. Pour ce faire, on agira sur les arrêts 28 et 44 de façon à libérer les bras 20 et 21 qui viendront occuper les positions représentées en traits mixtes de la figure 2 et qui une fois introduits contre les bords de la plaque à découper et par la géométrie de ceux-ci la serreront lors de son levage en assurant ainsi sa position durant l'opération de manutention.

## Revendications

1. Dispositif pour manipuler les outils d'une presse de découpage d'une matière en feuille, notamment pour manipuler les outils de découpage et d'éjection d'une telle presse, caractérisé en ce qu'il comprend un portique (1) comprenant une traverse (2) équipée, à l'extrémité de ses bras (3, 4) d'organes de maintien (6, 7) pour des outils de découpage, d'éjection et de séparation des poses, le portique (1) étant pourvu d'un guidon autorisant sa manoeuvre, à l'aide des deux mains d'un seul opérateur et en ce que ledit portique (1) est suspendu à un palan.

2. Dispositif selon la revendication 1, caractérisé en ce que la traverse (2) du portique (1) est équipée d'un dispositif auxiliaire de maintien (19) permettant la manipulation d'outils de configuration autre que celle des outils de découpage, d'éjection et de séparation des poses.

3. Dispositif selon la revendication 1, caractérisé en ce que le portique comprend des bras (3, 4) dont l'un d'entre eux est pourvu, à l'une de ses extrémités, d'un dispositif de verrouillage (17).

4. Dispositif selon la revendication 1, caractérisé en ce que le bras transversal (13) du guidon est équipé, sur sa droite d'un boîtier de commande pour le palan et sur sa gauche d'un dispositif de bloquage (16) et d'un dispositif de verrouillage (17).

5. Dispositif selon la revendication 1, caractérisé en ce que l'un des dispositifs de maintien (7) est commandé par le dispositif de verrouillage (17).

6. Dispositif selon la revendication 1, caractérisé en ce que le dispositif auxiliaire (19) comprend deux bras (20, 21) comportant deux organes de préhension (24, 25) destinés à recevoir des outils d'épaisseur différente de celle des outils supportés par les organes de maintien (6, 7) du portique (1).
